Europäisches Patentamt

European Patent Office

Office européen des brevets

(19)

(11) Publication number: **0 273 593**
**A2**

(12) **EUROPEAN PATENT APPLICATION**

(21) Application number: **87310501.9**

(22) Date of filing: **27.11.87**

(51) Int. Cl.4: **G01B 7/28** , G01B 21/20 ,
G01B 7/03 , G05B 19/25

(30) Priority: **13.12.86 GB 8629835**

(43) Date of publication of application:
**06.07.88 Bulletin 88/27**

(84) Designated Contracting States:
**BE CH DE GB LI**

(71) Applicant: **BRITISH-AMERICAN TOBACCO
COMPANY LIMITED
Westminster House 7 Millbank
London SW1P 3JE(GB)**

(72) Inventor: **Lumsden, William
The Spinney Rewlands Drive
Littleton Winchester Hampshire(GB)**

(74) Representative: **MacLean, Kenneth John
Hamson
Patents Section Group R & D Centre
British-American Tobacco Co. Ltd. Regent's
Park Road
Southampton, S09 1PE(GB)**

(54) **Determinations appertaining to incurvations.**

(57) There is disclosed a method of determining a more realistic nominated location of the centre of an incurvation, such as a carton blank crease line, when the incurvation is asymmetrical. There is also disclosed a method of inspection of an incurvation to provide a characterisation of the asymmetry thereof, which characterisation provides an indication of crease line stiffness. The method can be performed with use being made of programmable electronic means for movement of profile determining means along a predetermined path, for determining and storing incurvation profiles, and for determining the mean centre plane and peak centre plane.

The profile of an incurvation is determined by a probe moving in a traverse across, and in contact with, the surface of a carton blank. Measurement is made at a crease line of the location of the probe in the traverse direction (X co-ordinate) and in the height direction (Z co-ordinate) and an incurvation plot is obtainable. Determination is made of the height of the incurvation from a datum level. At a predetermined fraction of the height, determination of the peak aperture, and the mid-point thereof, is made. The mid-point of the aperture is known as the mean centre of the crease line profile and the Z co-ordinate plane containing the mean centre is known as, the means centre plane (MCP).

The location of the crease line from a datum line, such as a carton blank edge, then can be found by determining the relative dispositions of the MCP and the datum line.

Alternatively, determination of the peak centre and the peak centre plane (PCP) of the incurvation can be made and the perpendicular distance between the PCP and MCP can be determined to give an indication of the asymmetry of the crease line.

*Fig. 1.*

## DETERMINATIONS APPERTAINING TO INCURVATIONS

The invention the subject of this application relates to determinations appertaining to incurvations. As used herein the term "incurvation" means a concavity or a convexity of a surface or a line.

There is disclosed in the specification of European Patent Application No. 843034312.6 (published under No. 0 132 947) apparatus for and a method of inspector of the location and shapes of cut edges and crease lines of carton blanks. The apparatus comprises a probe mounted on a stepping motor-driven X-Y slide programmed to move the probe in a predetermined path over a carton blank, whereby information is obtained as to distances of crease lines from other crease lines or from cut edges. Information is also obtained as to the cross-sectional shape, i.e. profile, of crease lines. According to EPA 84304312.6, the highest point or centre of a crease line is taken to be the position of the crease line for the purpose of ascertaining the distance of the crease line from a datum line.

Investigations have shown that in the manufacture of carton blanks crease lines thereof are not in every case of the specified profile. A crease line specified to by symmetrical may, for example, possess a greater or lesser degree of asymmetry. In such a case the use of the location of the peak of the crease line profile as a reference for the determination of distance relative to the crease line is unsatisfactory.

It is an object of the present invention to provide, for the purposes of the determination of the distance of an incurvation from a datum line, a realistic nominated location for the incurvation applicable when the incurvation is asymmetric.

If the profile of a carton blank crease line is unduly asymmetrical, the resistance to folding (stiffness) of the crease line may be greater than a specified folding resistance value. In such case, in the erection or a carton from the blank a carton panel which has been folded about the crease line and secured to another panel of the blank by use of an adhesive, will tend to unfold and become detached from the second panel before the final setting point of the adhesive is reached. Should the carton making procedure be carried out on a carton making machine, such an event will result in the jamming of a mechanism of the machine.

It is a further object of the present invention to provide a characterisation of the asymmetry of an incurvation, which characterisation may be used as an indicator of crease line stiffness, useful for quality control purposes.

The present invention provides a method of ascertaining the distance of an incurvation from a datum line, wherein the profile or said incurvation is determined by profile determining means, measurement is made from a datum level of the height of said incurvation, measurement is made of the aperture of said incurvation at the level of a predetermined fraction of said height, determination is made of the mid-point of said aperture and measurement is made of the relative dispositions of said datum line and said mid-point.

According to a further aspect of the present invention there is also provided a method of inspection of an incurvation to provide a characterisation of the asymmetry of said incurvation, wherein the profile of said incurvation is determined by profile determining means, measurement is made from a datum level of the height of said incurvation, measurement is made of the aperture of said incurvation at the level of a predetermined fraction of said height, determination is made of the peak centre of said incurvation and measurement is made of the perpendicular distance between the plane perpendicularly bisecting said aperture and the plane which passes through said peak centre and which is parallel to said plane bisecting said aperture.

Both aspects of the present invention may be carried out using programmable electronic means.

The profile determining means may comprise a probe arranged for movement over and in contact with the surface of a workpiece and for the following undulations of the surface. The probe is suitably arranged for movement along a predetermined path under control, for example of programmable electronic means.

If an incurvation of a surface extends across the surface, as a ridge or elongate depression, the probe is suitably arranged for movement in lateral traverse of the incurvation, the path of traverse being preferably perpendicular to the incurvation at the location of the intersection of the path of traverse and the incurvation. During the traverse simultaneous determinations are made of the location of the probe in the traverse direction thereof and of the location thereof in a direction perpendicular to the traverse direction, i.e. in the height direction of the incurvation. These determinations are suitably stored in electronic memory means.

Suitably, during traverse movement of the probe determinations of the location of the probe in the height direction of the incurvation are initiated and discontinued at respective traverse direction locations to either side of the incurvation. In a case in which the portion of the surface extending from one side of an incurvation is at a height location different from the height location of the portion of the surface extending from the other side of the incurvation, the height of the incurvation is suitably measured using as the datum level that one of the two portions of the surface closer to the level of the peak of the incurvation. The datum level may, for example, be determined by comparing the first and last height determinations of the path of traverse of the incurvation and taking as the datum level the height location closer to the incurvation peak. Such datum level selection step is suitably performed by programmable electronic means.

Preferably, the aperture is measured in the traverse direction. The predetermined fraction of the height of the incurvation may be within a range of 0.4 to 0.6, suitably 0.5.

In regard to the determination of the peak centre for the purpose of the characterisation of the asymmetry of an incurvation, when the peak of the incurvation is of a generally rounded configuration, the peak centre may be taken to be at that point of the incurvation the height location of which is furthest from the datum level. In case in which the peak of the incurvation is of an irregular or of a flat configuration, in accordance with a subsidiary feature of the present invention the peak centre may be determined as the point of intersection of the incurvation by the plane which perpendicularly bisects the aperture of the incurvation at the level of a further predetermined fraction of the height of the incurvation as measured from the height location of the incurvation furthest from the datum level. The further fraction is a fraction less than the first mentioned predetermined fraction and is suitably a small fraction, not exceeding, for example 0.25 of the height of the incurvation and is preferably 0.15, or more preferably 0.1, of the height of the incurvation. In either case the peak centre is suitably determined by programmable electronic means.

In order that the present invention may be fully understood and readily carried into effect, reference will not be made, by way of example, to the drawing hereof, in which:-

Figure 1 shows diagrammatically and in vertical cross-section parts of a carton blank inspection apparatus; and

Figures 2 and 3 show plats representative of respective crease line profiles of carton blanks, the scale of the ordinate for each of which plots is larger, by about twenty times, than the abscissa scale.

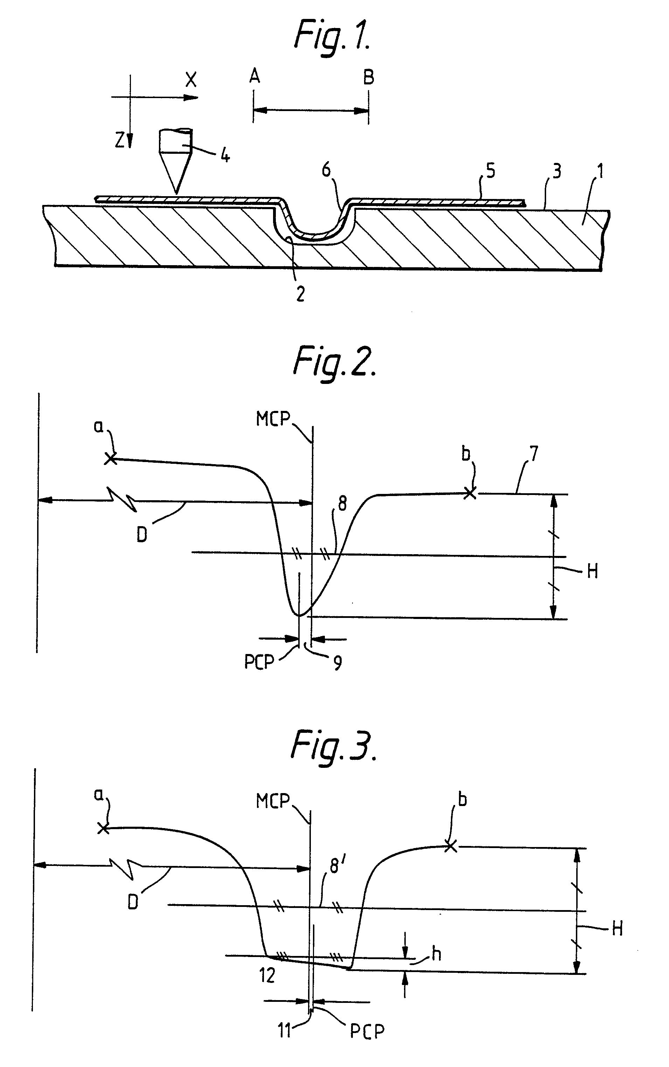

The carton blank inspection apparatus parts of which are shown in Figure 1 comprises a bed 1 provided with a groove 2 at upper face 3 thereof. Reference numeral 4 designates the lowermost parts of a probe of the apparatus, which probe 4 is mounted on a stepping motor-driven X-Y slide unit, which for the sake of simplicity is not shown.

Shown lying on the bed 1 of the inspection apparatus is part of a carton blank 5 comprising a crease line 6, which crease line 6 is received in the groove 2 of the bed 1.

The X-Y slide unit is programmed to move probe 4 in a continuous manner across, and in contact with, the upper surface of the carton blank 5 along a predetermined path at a slow speed over inspection areas and at a fast speed between inspection areas. An inspection area A-B encompassing the location of crease line 6 is shown in Figure 1. The inspection are A-B forms part of a traverse line of the predetermined path, which traverse line extends perpendicularly of the crease line 6. As the probe 4 passes through inspection area A-B determinations are made of the location of the probe 4 in the traverse direction, or X co-ordinate, and of the location thereof in a height direction perpendicular to the traverse direction, or Z co-ordinate. Plots of incurvation profiles obtained from traverses of two types of crease line are shown in Figures 2 and 3. The plot shown in Figure 2 shows a profile representative of a crease line which has a rounded base. Determination is made of the height H of the crease profile form a datum level 7. The datum level is that Z co-ordinate of point a and point b, i.e. the first and last Z co-ordinate determination made in the inspection area A-B, which is closer to the Z co-ordinate of the peak of the crease-profile. At a predetermined fraction of the height H, in this embodiment the half peak height, determination of the peak aperture 8 is made. The term "aperture" means the width of a crease profile at a level a predetermined fraction of the height H of the crease profile. Determination is also made of the mid-point of the aperture. The mid-point of the aperture is known as the mean centre of the crease line profile and the Z coordinate plane containing the mean centre is known as the mean centre plane (MCP). The mean centre plane of a crease line can be used in the determination of the location of the crease line in relation to another crease line or to an edge of a carton blank, as indicated by dimension line D.

The asymmetry of a crease line serves as a useful indicator of crease line stiffness for quality control purposes. For the purpose of measuring asymmetry, determination must be made of the peak centre of the crease line profile. When a crease line has a rounded base, as depicted in the representative profile shown in Figure 2, the peak centre is taken to be the lowest point of the profile. Measurement is made of the perpendicular distance 9 between the plane perpendicularly bisecting the aperture, i.e. the mean centre plane of the crease line profile, and the Z co-ordinate plane which passes through the peak centre, which latter plane is known as the peak centre plane (PCP). The distance 9 provides a characterisation of the symmetry of the crease line.

It will be clear to a man skilled in the art that, whereas the mid-point of the aperture is determined above by bisecting the aperture, the aperture may be divided at a ratio which is not at, but close to , all 1:1 ratio.

Figure 3 shows a plot of a profile representative of a crease line which has an irregular, generally flat bottom. Determination is made of the mean centre thereof in the manner described above for the profile shown in Figure 2. In respect of the asymmetry of the profile shown in Figure 3, should the peak centre be taken as the lowest point of the crease line profile, an overly high asymmetry would be measured, whilst the carton blank in some instances might exhibit acceptable crease stiffness. Also should be a completely flat-bottomed profile be obtained for a flat-bottomed crease, there are an infinite number of positions on the flat bottom which could qualify as the peak centre of the profile. Therefore, measurement is made of an aperture 12 of the crease line profile at a further predetermined fraction h of the height H of the profile, the further fraction h of the height H being less than the first mentioned fraction of the height H and, as shown in Figure 3, being about 0.1 of the height H of the profile.

Determination is made of the mid-point of the aperture of the profile at the level of the further predetermined fraction h of the height H, the plane containing which mid-point being taken to be the peak centre plane. Measurement of the perpendicular distance 11 between the mean centre plane and the peak centre plane provides a characterisation of the symmetry of the crease line. Determination of the mid-point of the aperture 12 serves to decrease the bias of asymmetry characterisation which would be present if the peak centre were always taken to be the lowest point of the crease line profile, especially in the case of an irregular flat-bottomed crease line profile.

As will be readily perceived by those skilled in the art, inspection apparatus employed in carrying out the present invention could comprise a flat topped, ungrooved inspection bed, the carton blank being placed on the bed with the flat side of the blank in contact with the bed. In such case, as the probe passes along the upper surface of the carton blank the probe encounters upwardly projecting crease lines. Representative crease line profiles in such cases would be inverted with respect to those shown in Figures 2 and 3.

The surface of a workpiece to be inspected in accordance with the present invention is preferably horizontally arranged, although it may be vertically arranged.

The determination of the peak centre of a profile as described for the example shown in Figure 3 is also applicable to the example shown in Figure 2 and to other profiles which have rounded bases and also to crease line profiles which have other peak irregularities.

The method described above for determining the distance of an incurvation from a datum line and for characterising the asymmetry of an incurvation may also be applied should profile inspection means comprising a surface-contacting probe be replaced by non-contact inspection means, optico-electrical or photographic inspection means, for example.

As will be readily appreciated by those skilled in the art, the method described above can be performed with use being made of programmable electronic means for movement of the probe along the predetermined path, for determining and storing incurvation profiles, and for determining the MCP and the PCP.

## Claims

1. A method of ascertaining the distance of an incurvation from a datum line, characterised in that (c.i.t.) the profile of said incurvation is determined by profile determining means, measurement is made from a datum level of the height of said incurvation, measurement is made of the aperture of said incurvation at the level of a predetermined fraction of said height, determination is made of the mid-point of said aperture and measurement is made of the relative dispositions of said datum line and said mid-point.

2. A method according to Claim 1, c.i.t. profile determinations in the height direction of said incurvation are initiated and discontinued by said profile determining means at respective locations to either side of said incurvation.

3. A method according to Claim 2, c.i.t. said datum level is determined by comparing the first and last height determinations of said profile of said incurvation and taking as said datum level the height location closer to the peak of said profile of said incurvation.

4. A method according to any one of the preceding claims, c.i.t. said aperture of said incurvation is is measured at 0.4 to 0.6 of said height of said incurvation.

5. A method according to Claim 4, c.i.t. said aperture is measured at 0.5 of said height of said incurvation.

6. A method of inspection of an incurvation to provide a characterisation of the asymmetry of said incurvation, c.i.t. the profile of said incurvation is determined by profile determining means, measurement is made from a datum level of the height of said incurvation, measurement is made of the aperture of said incurvation at the level of a predetermined fraction of said height, determination is made of the peak centre of said incurvation and measurement is made of the perpendicular distance between the plane perpendicularly bisecting said aperture and the plane which passes through said peak centre and which is parallel to said plane bisecting said aperture.

7. A method according to Claim 6, c.i.t. said peak centre is taken to be at that point of said profile of said incurvation the height location of which is furthest from said datum level.

8. A method according to Claim 6, c.i.t. said peak centre is determined as the point of intersection of the incurvation by the plane which perpendicularly bisects the aperture of said incurvation at the level of a further predetermined fraction of the height of said incurvation, which further fraction is less than the first mentioned fraction.

9. A method according to Claim 8, c.i.t. said further predetermined fraction does not exceed 0.25 of said height of said incurvation.

# Fig.1.

# Fig.2.

# Fig.3.